# EUROPEAN PATENT SPECIFICATION

(11) **EP 3 372 318 B1**
(45) Date of publication and mention of the grant of the patent: **31.05.2023**
(21) Application number: 18159290.8
(22) Date of filing: 28.02.2018
(51) Int. Cl.: B08B 3/02, F01D 5/00, B24C 1/00

(54) **NARROW GAP PROCESSING**
ENGSPALTVERARBEITUNG
TRAITEMENT D'ESPACE ÉTROIT

(30) Priority: 06.03.2017 US 201715450726
(43) Date of publication of application: 12.09.2018
(73) Proprietor: General Electric Company, Schenectady, NY 12345 (US)
(72) Inventor: CUI, Yan, Greenville, SC South Carolina 29615 (US); KOTTILINGAM, Srikanth Chandrudu, Greenville, SC South Carolina 29615 (US); TOLLISON, Brian Lee, Greenville, SC South Carolina 29615 (US); EMINOGLU, Cem Murat, Greenville, SC South Carolina 29615 (US)
(74) Representative: Novagraaf Group

(56) References cited:
- EP-A1- 0 783 044
- EP-A1- 1 859 896
- CA-A1- 2 403 247
- US-A1- 2009 270 014
- US-A1- 2013 180 107

## Description

### FIELD OF THE INVENTION

The present disclosure is directed to processes for preparing a component part for processing, the part being, in some examples a metal part, and in some particular examples a superalloy part. More specifically, the present embodiments are directed to processes for deep penetration within a gap (crevice or crack) for removal of contaminates, including, oxides, dirt, grease and other debris, prior to crack processing, for example, processing by one or more of brazing and narrow gap welding.

### BACKGROUND OF THE INVENTION

During operational use, machine components experience exposure to severe working environmental conditions, and material degradation will occur due to fatigue, creep, corrosion or oxidization. This is particularly the case with turbine engine parts formed of superalloy materials, which are susceptible to damage from erosion, oxidation, and attack from environmental contaminants.

Processing of in service turbine engine parts involves cleaning cracks and crevices, and other surfaces so to remove oxides, organic and inorganic impurities, and dirt prior to other processes, such as brazing and narrow gap welding, among others. Fluoride ion cleaning (FIC) or etching is commonly used to clean the surfaces of engine parts, including shallow cracks. However, cracks and crevices present unique challenges with respect to removal of contaminates and debris. In particular, crack depth and morphology can impede thorough crack preparation by common mechanical and chemical processing methods such as FIC. Insufficient removal of contaminants leads to incomplete gap processing, and residual oxides and other contaminants within a crack or crevice can lead to premature failure of a part. Alternatives to cleaning exist that involve removal of portions of the part in order to optimize processing, however, material removal also introduces material weakness that can adversely affect the useful life of a part.

US 2013/180107 A1 discloses a method for preparing to refurbish a turbo-machine component includes virtually refurbishing the turbo-machine component, actually refurbishing the turbo-machine component, and comparing the virtually refurbished turbo-machine component to the actually refurbished turbo-machine component. US 2009/0270014 A1 discloses a method and apparatus for stripping foreign matter from holes in a substrate, such as a turbine component. CA 2 403 247 A1 discloses a method and apparatus for automatically repairing the cracks produced in a member to be repaired. EP 1 859 896 A1 discloses a method of removing a deposit from a passage extending through a component. EP 0 783 044 A1 discloses a process for removing oxides, dirt, and organic impurities during repair of airfoils without damaging or effecting surface bond coats or base metal substrates of the airfoils.

### BRIEF DESCRIPTION OF THE INVENTION

In an exemplary embodiment, a process for treating a gaps within a component is provided in accordance with claim 1.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIG. 1 is a flow chart illustrating one embodiment of a process of treating a part;
FIG. 2 is a schematic view of a treated part, according to an embodiment of the present disclosure;
FIG. 3 is a schematic view of a treated part, according to an embodiment of the present disclosure;
FIG. 4 is a schematic view of a treated part, according to an embodiment of the present disclosure.

Wherever possible, the same reference numbers will be used throughout the drawings to represent the same parts.

### DETAILED DESCRIPTION OF THE INVENTION

The detailed description set forth below in connection with the appended drawings where like numerals reference like elements is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

All numbers expressing quantities of ingredients and/or reaction conditions are to be understood as being modified in all instances by the term "about", unless otherwise indicated.

All percentages and ratios are calculated by weight unless otherwise indicated. All percentages are calculated based on the total weight of a composition unless otherwise indicated. All component or composition levels are in reference to the active level of that component or composition, and are exclusive of impurities, for example, residual solvents or by-products, which may be present in commercially available sources.

The articles "a" and "an," as used herein, mean one or more when applied to any feature in embodiments of the present invention described in the specification and claims. The use of "a" and "an" does not limit the meaning to a single feature unless such a limit is specifically stated. The article "the" preceding singular or plural nouns or noun terms denotes a particular specified feature or particular specified features and may have a singular or plural connotation depending upon the context in which it is used. The adjective "any" means one, some, or all indiscriminately of whatever quantity.

A "gap," as that term is used herein, refers to any void volume, such as, for example, a crack, fissure, crevice, or aperture within a part, in particular, having a gap distance between opposing surfaces small enough such that the gap does not permit adequate penetration with conventional chemical and mechanical cleaning processes such that materials on the surface within the gap, such as oxides and other contaminants, cannot be removed from the defect using conventional processes.

"Brazing," as used herein, refers to what is conventionally known as a metal-joining process in which metal portions, such as parts, are joined together, or gaps are filled/closed, by melting and flowing a filler metal into a joint or gap, the filler metal having a lower melting point than the adjoining metal. In some embodiments, brazing is used in a gas turbine power generation parts. In some embodiments, brazing is used in a stainless steel alloy, a nickel-based superalloy, and/or a cobalt-based superalloy.

The term "water jet cleaning," as used herein, refers to cleaning a material using a pressurized stream of water, with or without the inclusion of abrasives in the water stream. A water jet is an industrial tool to cut a wide variety of materials using a very highpressure jet of water directed through a jet nozzle, wherein the nozzle travels along a path that may be linear, curved or irregular, the angular orientation of the nozzle being fixed or variably angled along the path, the path typically being directed by a computer program based on a predetermined path that is mapped relative to the component and controlled by an image analysis tracing system. As used for purposes of the instant disclosure, "cleaning" means and includes removal of material or debris using, in some embodiments, a water jet that may be sufficiently pressurized to cut the base material of the part, and, in other embodiments, using a water out stream that is not highly pressurized so that it only removes superficial debris but does not cut the base material of the part. In some embodiments, processing of a part may include combinations of these along a gap or on more than one gap in a treated portion of a part.

The term "imaging" includes any one or more imaging modality selected from conventional digital photography, X-ray, CT and UT.

The present invention includes, in various embodiments, processes for gap cleaning to provide the part with enhanced defect preparation and repair. In some embodiments, the cleaning constitutes water jet cleaning of at least a portion of a gap whereby one or more of surface contamination and/or oxidation and a portion of the part within and/or adjacent to the gap is removed by water jet cleaning. The processes hereof are particularly suited for parts and hardware used for power generation equipment, including gas turbines. Examples of a turbine part include a turbine blade, vane, bucket, nozzle, and the like.

The processes according to the present disclosure may effectively enable structural repair of hard-to-weld superalloy, and minimize the amount of base material of the part that must be removed, and thus confer optimal mechanical properties to the repaired part. In some embodiments, a repaired part herein illustrated may comprise a metal or an alloy. The alloy may comprise a superalloy. The term "superalloy" is used herein as it is commonly used in the art; i.e., a highly corrosion and oxidation resistant alloy that exhibits excellent mechanical strength and resistance to creep at high temperatures.

In some embodiments, the component may include, but not be limited to, a single crystal (SX) material, a directionally solidified (DS) material, an equiaxed crystal (EX) material, and combinations thereof.

In some embodiments, the superalloy may include nickel-based superalloy, cobalt-based superalloy, iron-based superalloy, titanium-based superalloy, or combinations thereof. The superalloy may include, but not be limited to, a material selected from the group consisting of Hastelloy, Inconel alloys, Waspaloy, Rene alloys, such as GTD111, GTD222, GTD444, GTD262, Mar M247, IN100, IN 738, René 80, IN 939, René N2, René N4, René N5, René N6, René 65, René 77 (Udimet 700), René 80, René 88DT, René 104, René 108, René 125, René 142, René 195, René N500, René N515, IN 706, Nimonic 263, CM247, MarM247, CMSX-4, MGA1400, MGA2400, INCONEL 700, INCONEL 738, INCONEL 792, DS Siemet, CMSX10, PWA1480, PWA1483, PWA1484, TMS-75, TMS-82, Mar-M-200, UDIMET 500, ASTROLOY, and combinations thereof.

Embodiments of the present disclosure, for example, provide narrow gap processing that removes contaminants and oxidation materials from the surfaces of and within deep gaps to provide enhanced quality processing and gap repairs. The processes hereof are particularly well suited for optimizing the processing and sealing of gaps in components, for example, in service run parts having gaps such as are found on the leading edge of an airfoil of a turbine nozzle. The process includes removal of surface contaminants and/or an oxidation layer inside a gap, particularly within deep gaps, using a water jet that delivers a stream of pressurized water with or without one or more abrasive substances. A gap or portion thereof may be cleaned according to the invention in a single pass or in multiple passes, whereby one or more portions or segments of the gap may be processed in a single pass, the full length may be processed in a single pass, and at least a portion may be processed in two or more passes. In some embodiments, a gap may be processed along all or a portion of its length, wherein all or only some portions are cleaned with a jet that includes an abrasive, and wherein in some embodiments, a length of a gap is initially processed with at least one abrasive in a first pass, then without an abrasive in a subsequent pass.

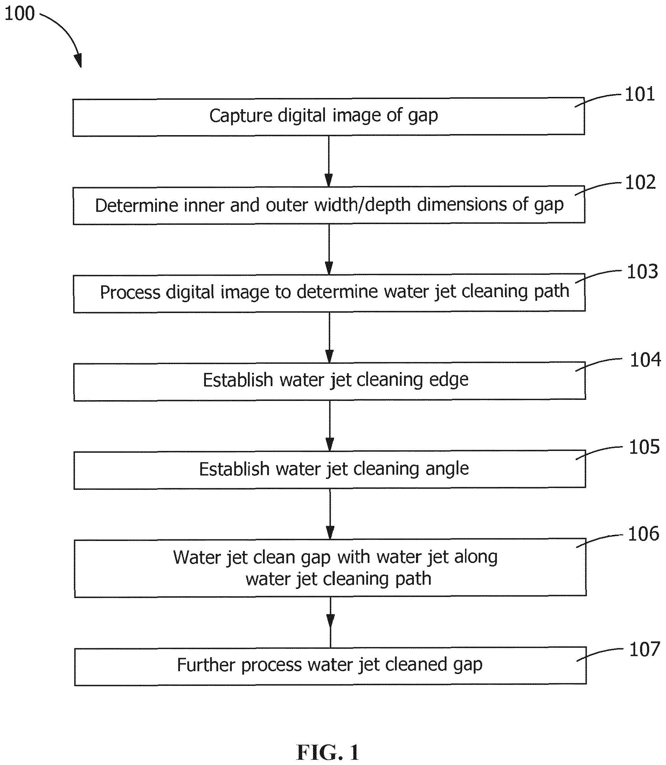

With reference to FIG. 1, a flow chart 100 illustrating a process for treating a component is provided. The process for treating a component includes a step 101 of capturing a digital image of a gap in a component. In a step 102, the inner and outer widths and depth of the gap are measured at one or more points along the length of the gap to determine the gap dimensions. In a step 103, a water jet cleaning path is determined based on the digital image of the gap and its measured dimensions. In a step 104, a water jet cleaning edge is selected at a distance of from about 0.000 to about 0.508mm (0.020 inches) from an edge of the gap. In a step 105, a water jet cleaning path angle is selected for orientation of the water jet. In a step 106, a water jet is activated and directed toward the gap, oriented with respect to the selected cleaning edge and cleaning path angle, and passed along the cleaning path which may be straight or curved or varied along a length of the gap being processed. In a step 107, the component may be further processed by cleaning or joining. Thus, for example, other preliminary, intervening or repeated processing steps are possible, including, but not limited to any one or more of the following before and after water jet cleaning, or between water jet cleaning passes: chemical or FIC cleaning, water cleaning, bake or vacuum cleaning; laser or mechanical cleaning; and one or more of filling and joining processes, including but not limited to, brazing and gap welding, to join the gap edges and seal the gap in the component.

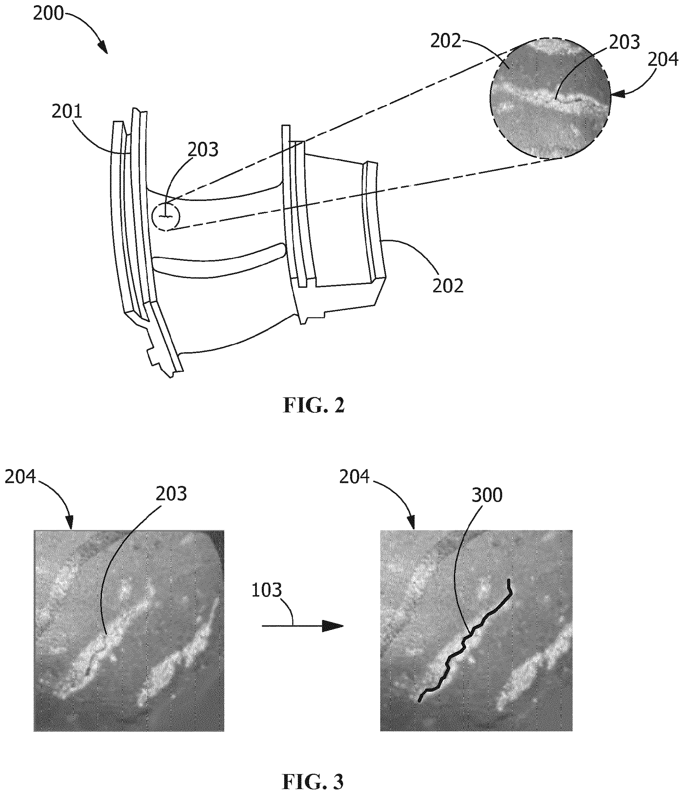

With reference to FIG. 2, a component 201 of a treatment process 200 includes a treated portion 202. The component 201 may be fabricated from any suitable material, in some embodiments, a metal or alloy. For example, suitable metals for use as component 201 include but are not limited to superalloys. In particular, component 201 may include nickel, cobalt, iron-based or titanium based superalloys. The treated portion 202 includes one or more gaps (e.g., a crack, or fissure) 203. Enlarged area of treated portion 204 shows a magnified view of treated portion 202. In some embodiments, the gap 203 may include, but not be limited to, one or more leading edge, or trailing edge cracks.

The process includes capturing a digital image 101 of the gap 203 for processing using software that establishes and guides the water jet cleaning path. In accordance with the invention, the digital image of all or a portion of the gap is captured utilizing an image modality selected from X-ray, CT and UT, and combinations thereof, and the cleaning path is achieved using a software program that controls the water jet.

The process further includes measuring a length of the gap and inner and outer gap dimensions at one or more points along the length of the gap 203 to determine its dimensions (step 102). In certain embodiments, the measuring may further include measuring techniques, such as, but not limited to, utilizing a white light 3D measurement system, a blue light 3D measurement system, and a laser based measuring system, or combinations thereof. The jet cleaning edge can be curved or straight, based on the surface morphology inside and outside the gap. In some embodiments, a partial or through-wall cleaning path can be created according to the extent of penetration of the gap into the part within the depth of the gap.

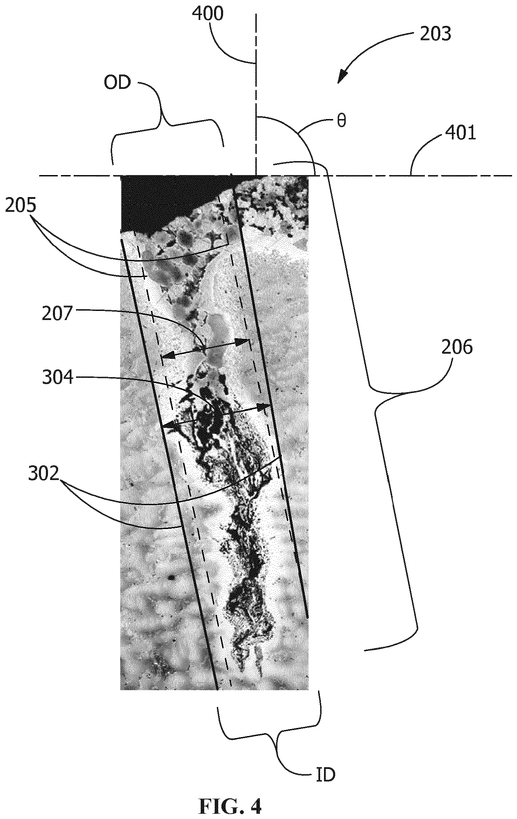

Referring now to FIG. 3, the treated portion 204 of the component 201 is processed in accordance with step 103 to determine the cleaning path 300. Referring now to FIG. 4, a cross sectional view of a gap 203 is shown, in which the various aspects and dimensions of the gap 203 are indicated. As shown, the gap 203 is generally characterized as having an outer dimension OD and an inner dimension ID that are defined along a depth 206 of the gap by opposing gap walls (or edges) 205. In accordance with the various embodiments, the selection of the jet cleaning angle θ, cleaning width 207 and the path 300 (see FIG 3) are influenced by the overall gap morphology, wherein the cleaning path 300 is established so as to direct the water jet to pass through both the outer dimension OD and the inner dimension ID to define cleaning path edges 302 of the gap along the length of the path, which may be the entire length of the gap, or only a portion or portions thereof, or may be greater than the length of the gap.

Thus, in some embodiments the cleaned gap width 302 may be equal to one or both the ID and the OD, or it may be narrower than both the ID and the OD or may be greater than both the ID and OD. It will be appreciated that in some embodiments, the processing disclosed herein will yield a processed gap such that the cleaning path edges 302 may be essentially coextensive with the gap edges 205, thus creating a cleaned gap width 304 that is essential the same as the original gap 203, accomplished in some examples by using an angled cleaning path along at least a portion of the gap so as to closely match the original OD and ID of the gap. And in some embodiments, the gap processing will yield a gap wherein the ID and OD are essentially equal, accomplished in some embodiments using a cutting jet (highly pressurized).

In accordance with various embodiments, the kerf, or width, of the water jet is in the range of about 1.016mm (0.040 inches) to about 1.27mm (0.050 inches), and can be as narrow as about 0.508mm (0.020 inches). Non-abrasive cuts are normally 0.1778mm (0.007 inches) to about 0.3302mm (0.013 inches), but can be as small as 0.0762mm (0.003 inches), which is approximately the width of a human hair. Water jets are capable of attaining accuracies to about 0.127mm (0.005 inches) with repeatability to about 0.0254mm (0.001 inches). Thus, gap widths that can be advantageously processed in a service-run part, such as for example a turbine nozzle, are typically less than 0.040 inches, though larger gaps may be beneficially processed by the processes. Thus, gaps having widths in the range from about 0.0254mm (0.001 inches) to about 1.27mm (0.050 inches) may be cleaned according to the instant processes. Thus, in various embodiments, the gap width may be from about 0.005, 0.010, 0.020, 0.030, 0.040, 0.050, 0.060, and 0.070 to about 0.080 including increments thereof and intervals therein. After processing, a gap may be further enlarged to enable adequate cleaning and removal of surface oxidation contaminants since the morphologies of a gap's inside and outside wall surface are often not in the same plane.

A water jet tool may be selected from any of a variety known in the art. The water jet used according to the disclosure may be adjusted with respect to pressure in the range from about 34.47 to 275,790 kPa (5 to 40,000 psi) or higher. It will be appreciated that the pressure may be varied along all or a portion of a gap in order to control the cleaning of the edges and penetration within the depth of a gap. Thus, lower pressure water jets allow removal of superficial material from gap edges, while higher pressure water jets enable penetration into deep gaps while not cutting the part, and the greatest pressure water jets enable cutting and removal of part base material. It will be appreciated that the pressure of the water jet may be selectively varied along a gap, and together with the angle of the jet, its distance from the part, and the distance of the cleaning edge from the gap edge will enable precise control over processing into the depth of a gap and the cleaned gap edge created thereby.

Thus, in various embodiments, the water jet pressure may be from about 34.47 to 275,790 kPa (5 psi and up to about 40,000 psi), and in some embodiments, the pressure may be at or about 20,000 or less to effect cleaning without cutting, wherein the pressure may be at or about 137,895 kPa (20,000 psi), or about 103,400kPa (15,000 psi), or about 68,948 kPa (10,000 psi), or about 34,474 kPa (5,000 psi), or about 6895 kPa (1,000 psi), or about 689.5kPa (100 psi), or about 68.95kPa (10 psi) or less to effect cleaning without cutting of a work piece, particularly a metal or alloy. And in some embodiments the pressure may be at least about 137,895 kPa (20,000 psi), or about 172,369 kPa (25,000 psi), or about 206,843kPa (30,000 psi), or about 241,317kPa (35,000 psi), or about 275,790 kPa (40,000 psi) or more to effect cutting of a work piece, particularly a metal or alloy.

In addition to controlling the water jet pressure, the position of the water jet head relative to the work piece may be varied in a range from about 1.016 mm to 1.524mm (0.040 inches to about 0.060 inches). Thus, the water jet head may be positioned from about 1.016, 1.143, 1.270, and 1.397 to about 1.524 mm (0.040, 0.045, 0.050, and 0.055 to about 0.060 inches) above the work piece, and this position may be maintained constant or may be varied along a cleaning path. Referring again to FIG. 4, the position of the water jet head may also be varied in its angulation θ relative to the work piece to follow the selected cleaning angle. Thus, the head may have an angle of essentially about zero and it may be angled from between 0 and 90 degrees relative to an axis 400 that is perpendicular to a surface of a work piece 401, and more particularly from between about 5 to about 70 degrees, and from about 5 to about 30 degrees, and from about 10 and to about 20 degrees relative to the surface of the work piece. Thus, in various embodiments, the water jet is angled at from about 1 to about 90 degrees from an axis that is perpendicular to the surface of the work piece.

In accordance with various embodiments, a gap may be processed along its entire length or along any portion of its length. And a gap may be processed by iterative steps that include processing of one or more segments or portions of the gap, wherein any one or more of the steps of imaging, measuring and selecting one or more of the cleaning edge and the cleaning angle may be repeated for separate portions of a gap. In some embodiments, only a portion of a gap may be subjected to one or more steps of the process.

In accordance with the various embodiments, the water jet cleaning edge 302 is from about 0.0127mm (0.0005 inches) to about 0.508mm (0.0200 inches) away from the edge of the gap. Thus, in various embodiments, the cleaning edge 302 may be from about 0.0127 to about 0.508mm (0.0005 to about 0.0200 inches), or from about 0.0127 to about 0.381mm (0.0005 to about 0.015 inches), or from about 0.0127 to about 0.254mm (0.0005 to about 0.010 inches), or from about 0.0254 to about 0.1905mm (0.0010 to about 0.0075 inches), or from about 0.0635 to about 127mm (0.0025 to about 0.0050 inches), and up to about 0.508mm (0.0200 inches), including increments and intervals therein.

Also in accordance with the process as shown in FIG. 1, the step of further processing 107 includes in some embodiments, processing by one or more preliminary, intermediate, and post-water jet cleaning processes selected from one or more of cleaning by any of a variety of means, cleaning by any of a variety of means, and joining, such as but not limited to, brazing, narrow gap welding, and other suitable joining or filling methods. Any and all such steps may occur alone, in combination, in connection with the processing of a single gap or multiple gaps, and may be repeated. Thus, in some embodiments, a gap may be processed in segments along its length, and on or more of before, after and between the processing of each segment, one or more additional processing steps may be followed, and each segment of the gap may be processed by either maintaining or varying any of the parameters of use of the water jet, including but not limited to, distance from the work piece, pressure, angle of the head (cleaning edge angle), and distance from the gap edge. In accordance with embodiments wherein brazing is selected, the process includes depositing a layer of braze material on the outer surface of the gap 103. In one embodiment, the thickness of the layer may correspond to resultant width of the gap 103. Braze material may include, but not be limited to, gold, copper, silver, platinum, palladium, nickel, titanium, vanadium, zirconium, cobalt, and combinations thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A process (100) for treating gaps (203) within a component (201), the process (100) comprising the steps of:
capturing (101) a digital image of a gap in a portion of a component (201);
measuring (102), at one or more points along a length of the gap (203), one or more features of the gap (203) selected from a length of the gap (203), an inner width of the gap (203), an outer width of the gap (203), and a depth of the gap (203) to determine gap (203) dimensions;
determining (103) a water jet cleaning path (300);
selecting (104) a water jet cleaning edge (302);
selecting (105) a water jet cleaning path (300) angle;
directing (106) a water jet toward the gap (203), oriented with respect to the selected cleaning edge (302) and cleaning path (300) angle;
activating the water jet and passing the water jet along the cleaning path (300); and,
processing (107) the gap (203) to join the gap edges and seal at least a portion of the gap (203) in the component (201),
wherein the capturing (101) of a digital image of all or a portion of the gap (203) comprises utilizing an imaging modality selected from X-ray, CT and UT, and
combinations thereof and wherein the determining of the cleaning path (300) is achieved using a software program that controls the water jet.

2. The process (100) of claim 1, wherein the measuring (102) includes measuring one or more features of the gap (203) selected from a length of the gap (203), an inner width of the gap (203), an outer width of the gap (203), and a depth of the gap (203) at two or more points along a length of the gap (203).

3. The process (100) of claim 1 or 2, wherein the water jet is angled at from 5 to 30 degrees from an axis (400) that is perpendicular to the surface of the work piece (401).

4. The process (100) of any one of claims 1 to 3, wherein the gap (203) is between 0.127mm (0.005 inches) and 2.032mm (0.080 inches).

5. The process (100) of any one of claims 1 to 4, wherein the water cleaning edge (302) defined by the cleaning path (300) is at a distance of from 0.0127mm (0.0005 inches) to 0.508mm (0.0200 inches) from an edge of the gap (203).

6. The process (100) of any one of claims 1 to 5, wherein the water jet pressure is from 34.47 kPa (5 psi) and up to 275,790 kPa (40,000 psi).

7. The process (100) of any one of claims 1 to 6, wherein the water jet head is at distance from the component (201) from 1.016mm (0.040 inches) to 1.524mm (0.060 inches).

8. The process (100) of any one of claims 1 to 7, wherein the water jet includes one or more of at least one abrasive material delivered along all or a portion of a gap (203), and a kerf that is in the range of from 1.016mm (0.040 inches) to 1.27mm (0.050 inches).

9. The process (100) of any one of claims 1 to 8, wherein the processing (107) is along all or a portion of the gap (203), and wherein the process (107) is optionally repeated in multiple passes along one or more portions of the gap (203).

10. The process (100) of any one of claims 1 to 9 including at least one additional processing step (107) any one or more of before and after water jet cleaning (106), and between water jet cleaning passes, the addition processing step (107) selected from the group consisting of chemical cleaning, FIC cleaning, water cleaning, bake cleaning, vacuum cleaning; laser cleaning, mechanical cleaning; brazing and gap welding.

11. The process of (100) any one of claims 1 to 10 wherein the gap (203) is processed in at least one or more passes along all or a portion of its length, and each pass optionally includes at least one additional processing step (107) any one or more of before and after water jet cleaning (106), and between water jet cleaning passes, the additional processing step (107) selected from the group consisting of chemical cleaning, FIC cleaning, water cleaning, bake cleaning, vacuum cleaning; laser cleaning, mechanical cleaning; brazing and gap welding.

12. The process (100) of any one of claims 1 to 11, wherein the processing of the gap (203) to join the gap edges includes brazing with a braze material that comprises a material selected from the group consisting of gold, copper, silver, platinum, palladium, nickel, titanium, vanadium, zirconium, cobalt, and combinations thereof, and wherein the component (201) is a turbine component selected from the group consisting of at least one of blades, buckets, vanes, nozzles, shrouds, combustor liners, and transition ducts.

13. The process (100) of any one of claims 1 to 12, wherein the component (201) comprises a superalloy material selected from the group consisting of nickel-based superalloy, cobalt-based superalloy, iron-based superalloy, titanium-based superalloy, and combinations thereof

14. The process (100) of claim 1 wherein:
the component (201) is a superalloy turbine component (201) part;
the gap (203) is between 0.127mm (0.005 inches) and 2.032mm (0.080 inches);
the water cleaning path (300) is at a distance of from 0.0127 to 0.508mm (0.0005 to 0.0200 inches) from an edge of the gap (203);
the water jet cleaning path angle that is from 5 to 30 degrees from an axis (400) that is perpendicular to the surface of the work piece (401); and
the component (201) comprises a superalloy material selected from the group consisting of nickel-based superalloy, cobalt-based superalloy, iron-based superalloy, titanium-based superalloy, and combinations thereof;
the process further comprising setting the water jet to deliver water at a pressure selected from one of 34.47kPa (5 psi) and up to 137,895kPa (20,000 psi), and from more than 137,895kPa (20,000 psi) and up to 275,790kPa (40,000 psi), and at a distance from the component (201) from 1.016mm (0.040 inches) to 1.524mm (0.060 inches).

## Patentansprüche

1. Verfahren (100) zum Behandeln von Spalten (203) innerhalb einer Komponente (201), das Verfahren (100) umfassend die Schritte:
Erfassen (101) eines digitalen Bildes eines Spalts in einem Abschnitt einer Komponente (201);
Messen (102), an einem oder mehreren Punkten entlang einer Länge des Spalts (203), eines oder mehrerer Merkmale des Spalts (203), ausgewählt aus einer Länge des Spalts (203), einer Innenbreite des Spalts (203), einer Außenbreite des Spalts (203) und einer Tiefe des Spalts (203), um die Abmessungen des Spalts (203) zu bestimmen;
Bestimmen (103) eines Wasserstrahlreinigungspfads (300);
Auswählen (104) einer Wasserstrahlreinigungskante (302);
Auswählen (105) eines Winkels eines Wasserstrahlreinigungspfads (300);
Richten (106) eines Wasserstrahls auf den Spalt (203), der in Bezug auf die ausgewählte Reinigungskante (302) und den Winkel des Reinigungspfads (300) ausgerichtet ist;
Aktivieren des Wasserstrahls und Leiten des Wasserstrahls entlang des Reinigungspfads (300); und,
Verarbeiten (107) des Spalts (203), um die Spaltkanten zu verbinden und mindestens einen Abschnitt des Spalts (203) in der Komponente (201) abzudichten,
wobei das Erfassen (101) eines digitalen Bildes des gesamten oder eines Abschnitts des Spalts (203) ein Verwenden einer Bildgebungsmodalität umfasst, ausgewählt aus Röntgenstrahlung, CT und UT und Kombinationen davon, und wobei das Bestimmen des Reinigungspfads (300) unter Verwendung eines Softwareprogramms erreicht wird, das den Wasserstrahl steuert.

2. Verfahren (100) nach Anspruch 1, wobei das Messen (102) das Messen eines oder mehrerer Merkmale des Spalts (203) einschließt, ausgewählt aus einer Länge des Spalts (203), einer Innenbreite des Spalts (203), einer Außenbreite des Spalts (203) und einer Tiefe des Spalts (203) an zwei oder mehr Punkten entlang einer Länge des Spalts (203).

3. Verfahren (100) nach Anspruch 1 oder 2, wobei der Wasserstrahl von 5 bis 30 Grad von einer Achse (400) abgewinkelt ist, die senkrecht zu der Oberfläche des Werkstücks (401) ist.

4. Verfahren (100) nach einem der Ansprüche 1 bis 3, wobei der Spalt (203) zwischen 0,127 mm (0,005 Zoll) und 2,032 mm (0,080 Zoll) liegt.

5. Verfahren (100) nach einem der Ansprüche 1 bis 4, wobei die Wasserreinigungskante (302), die durch den Reinigungspfad (300) definiert ist, in einem Abstand von 0,0127 mm (0,0005 Zoll) bis 0,508 mm (0,0200 Zoll) von einer Kante des Spalts (203) liegt.

6. Verfahren (100) nach einem der Ansprüche 1 bis 5, wobei der Wasserstrahldruck von 34,47 kPa (5 psi) und bis zu 275.790 kPa (40.000 psi) beträgt.

7. Verfahren (100) nach einem der Ansprüche 1 bis 6, wobei der Wasserstrahlkopf in einem Abstand von der Komponente (201) von 1,016 mm (0,040 Zoll) bis 1,524 mm (0,060 Zoll) liegt.

8. Verfahren (100) nach einem der Ansprüche 1 bis 7, wobei der Wasserstrahl eines oder mehrere von mindestens einem Schleifmaterial, das entlang des gesamten oder eines Abschnitts eines Spalts (203) abgegeben wird, und einer Kerbe einschließt, die in dem Bereich von 1,016 mm (0,040 Zoll) bis 1,27 mm (0,050 Zoll) liegt.

9. Verfahren (100) nach einem der Ansprüche 1 bis 8, wobei das Verarbeiten (107) entlang des gesamten oder eines Abschnitts des Spalts (203) erfolgt und wobei das Verfahren (107) optional in mehreren Durchgängen entlang eines oder mehrerer Abschnitte des Spalts (203) wiederholt wird.

10. Verfahren (100) nach einem der Ansprüche 1 bis 9, das mindestens einen zusätzlichen Verarbeitungsschritt (107) eines beliebigen von einem oder mehreren vor und nach der Wasserstrahlreinigung (106) und zwischen Wasserstrahlreinigungsdurchgängen einschließt, wobei der Zusatzverarbeitungsschritt (107) aus der Gruppe ausgewählt ist, bestehend aus chemischer Reinigung, FIC-Reinigung, Wasserreinigung, Bake-Reinigung, Vakuumreinigung; Laserreinigung, mechanischem Reinigen, Hartlöten und Spaltschweißen.

11. Verfahren (100) nach einem der Ansprüche 1 bis 10, wobei der Spalt (203) in mindestens einem oder mehreren Durchgängen entlang des gesamten oder eines Abschnitts seiner Länge verarbeitet wird, und jeder Durchgang optional mindestens einen zusätzlichen Verarbeitungsschritt (107) eines beliebigen von einem oder mehreren vor und nach der Wasserstrahlreinigung (106) und zwischen Wasserstrahlreinigungsdurchgängen einschließt, wobei der Zusatzverarbeitungsschritt (107) aus der Gruppe ausgewählt ist, bestehend aus chemischer Reinigung, FIC-Reinigung, Wasserreinigung, Bake-Reinigung, Vakuumreinigung; Laserreinigung, mechanischem Reinigen, Hartlöten und Spaltschweißen.

12. Verfahren (100) nach einem der Ansprüche 1 bis 11, wobei die Verarbeitung des Spalts (203), um die Spaltkanten zu verbinden, ein Löten mit einem Lötmaterial einschließt, das ein Material umfasst, das aus der Gruppe ausgewählt ist, bestehend aus Gold, Kupfer, Silber, Platin, Palladium, Nickel, Titan, Vanadium, Zirkonium, Kobalt und Kombinationen davon, und wobei die Komponente (201) eine Turbinenkomponente ist, die aus der Gruppe ausgewählt ist, bestehend aus mindestens einem von Schaufeln, Schaufelblättern, Leitschaufeln, Düsen, Ummantelungen, Brennkammerauskleidungen und Übergangskanälen.

13. Verfahren (100) nach einem der Ansprüche 1 bis 12, wobei die Komponente (201) ein Superlegierungsmaterial umfasst, das aus der Gruppe ausgewählt ist, bestehend aus einer Superlegierung auf Nickelbasis, einer Superlegierung auf Kobaltbasis, einer Superlegierung auf Eisenbasis, einer Superlegierung auf Titanbasis und Kombinationen davon.

14. Verfahren (100) nach Anspruch 1, wobei
die Komponente (201) ein Teil einer Superlegierungs-Turbinenkomponente (201) ist;
der Spalt (203) zwischen 0,127 mm (0,005 Zoll) und 2,032 mm (0,080 Zoll) beträgt;
der Wasserreinigungspfad (300) in einem Abstand von 0,0127 bis 0,508 mm (0,0005 bis 0,0200 Zoll) von einer Kante des Spalts (203) liegt;
der Winkel des Wasserstrahlreinigungspfads von 5 bis 30 Grad von einer Achse (400) ist, die senkrecht zu der Oberfläche des Werkstücks (401) ist; und
die Komponente (201) ein Superlegierungsmaterial umfasst, das aus der Gruppe ausgewählt ist, bestehend aus einer Superlegierung auf Nickelbasis, einer Superlegierung auf Kobaltbasis, einer Superlegierung auf Eisenbasis, einer Superlegierung auf Titanbasis und Kombinationen davon.
das Verfahren ferner umfassend ein Einstellen des Wasserstrahls, um Wasser bei einem Druck, ausgewählt aus einem von 34,47 kPa (5 psi) und bis zu 137.895 kPa (20.000 psi), und von mehr als 137.895 kPa (20.000 psi) und bis zu 275.790 kPa (40.000 psi) und in einem Abstand von der Komponente (201) von 1,016 mm (0,040 Zoll) zu 1,524 mm (0,060 Zoll) abzugeben.

## Revendications

1. Procédé (100) pour traiter des espaces (203) au sein d'un composant (201), le procédé (100) comprenant les étapes de :
capture (101) d'une image numérique d'un espace dans une partie d'un composant (201) ;
mesure (102), au niveau d'un ou plusieurs points le long d'une longueur de l'espace (203), d'une ou plusieurs caractéristiques de l'espace (203) choisies parmi une longueur de l'espace (203), une largeur interne de l'espace (203), une largeur externe de l'espace (203), et une profondeur de l'espace (203) pour déterminer les dimensions de l'espace (203) ;
détermination (103) d'un chemin de nettoyage par jet d'eau (300) ;
sélection (104) d'un bord de nettoyage par jet d'eau (302) ;
sélection (105) d'un angle de trajet de nettoyage par jet d'eau (300) ;
direction (106) d'un jet d'eau vers l'espace (203), orienté par rapport au bord de nettoyage (302) et à l'angle de trajet de nettoyage (300) sélectionnés ;
activation du jet d'eau et passage du jet d'eau le long du trajet de nettoyage (300) ; et,
traitement (107) de l'espace (203) pour joindre les bords d'espace et sceller au moins une partie de l'espace (203) dans le composant (201),
dans lequel la capture (101) d'une image numérique de la totalité ou d'une partie de l'espace (203) comprend l'utilisation d'une modalité d'imagerie choisie parmi les rayons X, CT et UT, et des combinaisons de ceux-ci et dans lequel la détermination du trajet de nettoyage (300) est obtenue en utilisant un programme logiciel qui commande le jet d'eau.

2. Procédé (100) selon la revendication 1, dans lequel la mesure (102) inclut la mesure d'une ou plusieurs caractéristiques de l'espace (203) choisies parmi une longueur de l'espace (203), une largeur interne de l'espace (203), une largeur externe de l'espace (203), et une profondeur de l'espace (203) en deux points ou plus le long d'une longueur de l'espace (203).

3. Procédé (100) selon la revendication 1 ou 2, dans lequel le jet d'eau est incliné de 5 à 30 degrés par rapport à un axe (400) qui est perpendiculaire à la surface de la pièce à usiner (401).

4. Procédé (100) selon l'une quelconque des revendications 1 à 3, dans lequel l'espace (203) est entre 0,127 mm (0,005 pouce) et 2,032 mm (0,080 pouce).

5. Procédé (100) selon l'une quelconque des revendications 1 à 4, dans lequel le bord de nettoyage d'eau (302) défini par le trajet de nettoyage (300) est à une distance de 0,0127 mm (0,0005 pouce) à 0,508 mm (0,0200 pouce) à partir d'un bord de l'espace (203).

6. Procédé (100) selon l'une quelconque des revendications 1 à 5, dans lequel la pression de jet d'eau est de 34,47 kPa (5 psi) et jusqu'à 275 790 kPa (40 000 psi).

7. Procédé (100) selon l'une quelconque des revendications 1 à 6, dans lequel la tête de jet d'eau est à distance du composant (201) de 1,016 mm (0,040 pouce) à 1,524 mm (0,060 pouce).

8. Procédé (100) selon l'une quelconque des revendications 1 à 7, dans lequel le jet d'eau inclut un ou plusieurs parmi au moins un matériau abrasif délivré le long de la totalité ou une partie d'un espace (203), et une entaille qui est dans la plage allant de 1,016 mm (0,040 pouce) à 1,27 mm (0,050 pouce).

9. Procédé (100) selon l'une quelconque des revendications 1 à 8, dans lequel le traitement (107) est le long de la totalité ou d'une partie de l'espace (203), et dans lequel le procédé (107) est éventuellement répété en plusieurs passages le long d'une ou plusieurs parties de l'espace (203).

10. Procédé (100) selon l'une quelconque des revendications 1 à 9, incluant au moins une étape de traitement supplémentaire (107) de l'un quelconque ou plusieurs parmi avant et après le nettoyage par jet d'eau (106), et entre les passages de nettoyage par jet d'eau, l'étape de traitement d'addition (107) choisie dans le groupe constitué par le nettoyage chimique, le nettoyage FIC, le nettoyage à l'eau, le nettoyage par cuisson, le nettoyage sous vide ; le nettoyage au laser, le nettoyage mécanique ; le brasage et le soudage d'espace.

11. Procédé (100) selon l'une quelconque des revendications 1 à 10, dans lequel l'espace (203) est traité dans au moins un ou plusieurs passages le long de la totalité ou d'une partie de sa longueur, et chaque passage inclut facultativement au moins une étape de traitement supplémentaire (107) de l'un quelconque ou plusieurs parmi avant et après le nettoyage par jet d'eau (106), et entre les passages de nettoyage par jet d'eau, l'étape de traitement supplémentaire (107) choisie dans le groupe constitué par le nettoyage chimique, le nettoyage FIC, le nettoyage à l'eau, le nettoyage par cuisson, le nettoyage sous vide ; le nettoyage au laser, le nettoyage mécanique ; le brasage et le soudage d'espace.

12. Procédé (100) selon l'une quelconque des revendications 1 à 11, dans lequel le traitement de l'espace (203) pour joindre les bords d'espace inclut un brasage avec un matériau de brasage qui comprend un matériau choisi dans le groupe constitué d'or, cuivre, argent, platine, palladium, nickel, titane, vanadium, zirconium, cobalt, et des combinaisons de ceux-ci, et dans lequel le composant (201) est un composant de turbine choisi dans le groupe constitué d'au moins l'un parmi des pales, des godets, des aubes, des buses, des carénages, des revêtements de chambre de combustion, et des conduits de transition.

13. Procédé (100) selon l'une quelconque des revendications 1 à 12, dans lequel le composant (201) comprend un matériau en superalliage choisi dans le groupe constitué d'un superalliage à base de nickel, un superalliage à base de cobalt, un superalliage à base de fer, un superalliage à base de titane, et des combinaisons de ceux-ci

14. Procédé (100) selon la revendication 1, dans lequel :
le composant (201) est une partie de composant de turbine en superalliage (201) ;
l'espace (203) est compris entre 0,127 mm (0,005 pouce) et 2,032 mm (0,080 pouce) ;
le trajet de nettoyage à l'eau (300) est à une distance de 0,0127 à 0,508 mm (0,0005 à 0,0200 pouce) d'un bord de l'espace (203) ;
l'angle de trajet de nettoyage par jet d'eau qui est de 5 à 30 degrés par rapport à un axe (400) qui est perpendiculaire à la surface de la pièce à usiner (401) ; et
le composant (201) comprend un matériau en superalliage choisi dans le groupe constitué d'un superalliage à base de nickel, un superalliage à base de cobalt, un superalliage à base de fer, un superalliage à base de titane, et des combinaisons de ceux-ci ;
le procédé comprenant en outre le réglage du jet d'eau pour délivrer de l'eau à une pression choisie parmi l'une de 34,47 kPa (5 psi) et jusqu'à 137 895 kPa (20 000 psi), et de plus de 137 895 kPa (20 000 psi) et jusqu'à 275 790 kPa (40 000 psi), et à une distance du composant (201) de 1,016 mm (0,040 pouce) à 1,524 mm (0,060 pouce).
